# EUROPEAN PATENT SPECIFICATION

(11) **EP 3 119 178 B1**
(45) Date of publication and mention of the grant of the patent: **17.07.2019**
(21) Application number: 15715471.7
(22) Date of filing: 06.03.2015
(51) Int. Cl.: A01B 69/00, G01D 1/02

(54) **METHOD AND SYSTEM FOR NAVIGATING AN AGRICULTURAL VEHICLE ON A LAND AREA**
VERFAHREN UND SYSTEM ZUR NAVIGATION EINES LANDWIRTSCHAFTLICHEN FAHRZEUGS AUF EINER LANDFLÄCHE
PROCÉDÉ ET SYSTÈME DE NAVIGATION POUR UN VÉHICULE AGRICOLE SUR UNE SURFACE DE TERRE

(30) Priority: 20.03.2014 NL 2012485
(43) Date of publication of application: 25.01.2017
(73) Proprietor: Lely Patent N.V., 3147 PB Maassluis (NL)
(72) Inventor: REIJERSEN VAN BUUREN, Willem Jacobus, 3147PB Maassluis (NL)
(74) Representative: Octrooibureau Van der Lely N.V.
(86) International application number: PCT/NL2015/050143
(87) International publication number: WO 2015/142166

(56) References cited:
- EP-A1- 1 681 538
- EP-A2- 2 372 582
- CA-A1- 2 380 048
- US-A- 5 155 683
- US-A1- 2011 231 061
- US-B1- 6 445 983

## Description

### FIELD OF THE INVENTION

The invention relates to the field of navigating vehicles, and more specifically to a method and system for navigating agricultural vehicles on a land area.

### BACKGROUND OF THE INVENTION

In agriculture, when working large areas of land, different vehicles are used, such as tractors and towed farm vehicles such as plows, rippers, disks, planters, applicators, drills and other equipment. A control of the track of such vehicles, i.e. navigating the vehicles, is more and more automated to reduce or avoid intervention by human operators. Document US2011/231061 discloses a method and apparatus for steering an agricultural vehicle around a field, based on a map, vehcile data and orientation data, using GNSS technology. GPS technology and systems based on a similar global navigational satellite system, GNSS, support self-propelled vehicles in accurately following predetermined tracks, even in dusty and dark conditions. Such tracks have been predetermined, and their position coordinates are compared with actual GNSS position coordinates in order to control a path of a vehicle equipped with a GNSS receiver to adhere to the predetermined track.

A GNSS allows operations on a land area to be performed more accurately and efficiently, using less fuel, less herbicides and other chemicals, and less time, while improving the quality of the soil and the products grown.

A disadvantage of using GNSS technology is that in adverse circumstances the satellite signals on which the positioning relies can be disturbed to an extent that the required positioning information is unavailable, or cannot be used. Another disadvantage of use of a GNSS for navigating is that the positioning information provides a limited position accuracy. A further disadvantage of use of a GNSS is that the algorithms used to process the positioning signals tend to change often, so that frequent updates are necessary.

A still further disadvantage is that GNSSs only allow a vehicle to follow a predetermined track on a land area, not taking into account the actual circumstances on the land area, such as a nature-induced or a man-induced obstacle, in particular when the vehicle is unmanned. A nature-induced obstacle can for example be a local flooding. A man-induced obstacle can for example be a rock pile. Such obstacles in fact would make it necessary to avoid the obstructed area for several reasons. First, the intended working of the land in the obstructed area would in many cases not have the desired effect at all. Second, there is a great risk of the vehicle getting stuck or being damaged or otherwise rendered unusable when entering the obstructed area.

Accordingly, a need exists for an improved method and system for navigating agricultural vehicles on a land area, whereby at least one of the identified disadvantages is reduced or overcome.

### SUMMARY OF THE INVENTION

It would be desirable to provide a method and system for navigating agricultural vehicles on a land area that does not, or does not substantially, rely on GNSS technology. It would also be desirable to provide a method and system for navigating agricultural vehicles on a land area that allows for adaptation of a track to differ from a predetermined track in case actual circumstances would necessitate such adaptation.

To better address one or more of these concerns, in a first aspect of the invention a method of navigating an agricultural vehicle on a land area is provided according to claim 1, in particular the method comprising:
- building a map of the land area, with the help of an aircraft with a camera system and based on a plurality of landmarks in the land area;
- imaging, in real-time, at least part of the land area from above to provide a sequence of images showing the vehicle and at least one landmark;
- identifying positions of the vehicle on the land area from the sequence of images by image processing, to provide vehicle data based on the identification of the positions of the vehicle;
- identifying a position of at least one landmark on the land area from the sequence of images by image processing, to provide landmark data based on the identification of the position of the at least one landmark;
- controlling a path of the vehicle across the land area based on the built map, the vehicle data and the landmark data.

The method of the invention does not rely on the use of a GNSS, or at least does not rely primarily on the use of a GNSS, and thus may avoid at least some of the disadvantages of such system as explained above. Nevertheless, the method of the invention can be combined with a GNSS if it would be desirable to work the land area in circumstances when imaging the land area does not, or does not sufficiently, provide information, such as at night or under low visibility conditions, e.g. misty or cloudy conditions.

The building of a map allows a better, more precise knowledge of the land area, which may lead to easier, better or more complete land usage. For example, knowing exactly where the land area ends, or where a stream or ditch is, will provide knowledge to guide the agricultural vehicle, which knowledge will not come from gps coordinates of the corners of the land alone, since the ditch may have eroded and so on.

The real-time imaging of the land area will provide information on the actual state of the land area, including any obstacles that should be circumvented by the agricultural vehicle, and that may have a temporary and/or unexpected character such as caused by weather conditions. With information on the obstacles, the path of the vehicle can be controlled to deliberately deviate from a predetermined track to avoid the obstacle, if necessary or advisable, even without human intervention. The real-time character of the imaging ensures the control of the path of the vehicle to be in time for a continuous and uninterrupted movement of the vehicle.

Controlling the path of the vehicle comprises controlling a direction of movement of the vehicle, e.g. by controlled actuation of a steering mechanism of the vehicle while the vehicle is driven to move. Preferably, the controlling is done by an automatic controller.

Note that it is not strictly necessary for the airborne vehicle, or aircraft, to be present at the same time as the agricultural vehicle whose path is to be controlled. Rather, it is also possible to let the aircraft build the map, including positions of landmarks, while the step of imaging to provide images showing the vehicle and at least one landmark is performed with a separate camera system, such as in particular a camera system provided on the agricultural vehicle. Then, the camera system images the environment of the agricultural vehicle, and determines its position, and thus the position of the agricultural vehicle, with respect to the at least one landmark in the image. The system is then able to determine the agricultural vehicle's position on the map and thereby control its path over the land area.

The landmark may be a fixed element on or near the land area, such as a house, a tree, a river or stream, a road, etc.

The sequence of images of at least part of the land area may be still images taken in regular intervals, or may be part of a video, comprising the sequence of images. The images show a view of the vehicle from above, either straight above (at an angle of 0°) or at an angle different from 0°, depending on the relative positions of the imaging viewpoint and the vehicle. Similarly, the images show a view of the landmark or landmarks at an angle which depends on the relative positions of the imaging viewpoint and the landmark or landmarks.

In the images, the relative positions or locations of the vehicle and the at least one landmark are assessed in the identifying steps, and the vehicle data and the landmark data resulting from the identifying steps, and representing these positions, are mapped and/or converted to an actual position of the vehicle the land area. In the controlling step, this actual position may be compared to a predetermined track that the vehicle should follow, and the path of the vehicle can then be controlled to follow the track. If deviations between the vehicle position and the track are found in the comparison, then a correction of the path of vehicle can be performed to bring the vehicle back on track. If the imaging results in an obstacle being identified on the vehicle path, then the path of the vehicle can deliberately be controlled to avoid the obstacle and thus to deviate from the predetermined track along a diverting path to a location where the predetermined track can be picked up and followed again.

In embodiments, the step of building the map comprises entering basic map information about the land area, the basic map information comprising object data of at least one landmark, selecting a starting position for the aircraft, carrying out at least once
- imaging, the land area from above with the aircraft to provide an image of at least a part of the land area;
- detecting a landmark in said image by image processing, and based on the basic map information;
- identifying a position of said landmark by image processing and storing said position in the map
- at least one of i) detecting a further landmark in said image, and identifying the position of the further landmark, and ii) moving the aircraft to a new position,
until a predetermined criterion with respect to the basic map information has been fulfilled. In this way, the map will be built on the basis of the basic map information, that may comprise gps coordinates of corners of the land area, of specific fixed objects, or landmarks, such as trees or the like. Landmarks may be detected and identified in any known way, as will be elucidated further below. Alternatively or additionally, the basic map information may comprise indications about the presence of such objects (landmarks) such as "a stream is a boundary", which may help navigate the aircraft. Alternatively or additionally, distances and directions with respect to a starting point may be given. The starting position may be any arbitrary position, as it suffices for the map to be based on relative coordinates. In all of the above, such data may e.g. be taken from the cadaster, existing maps and so on. The basic map information may help the aircraft to navigate over the land area. Note, however, that the (relative) positions as will be determined by the aircraft will be used for and stored in the map to be built. It is this latter, more precise map, that will be used for guiding the agricultural vehicle.

The imaging of the land area may advantageously be performed in real time, as this improves the accuracy of the built map, since then no undesired shifts in position will occur, or at least to a lesser degree.

The predetermined condition may comprise that at least a predetermined number of points or landmarks have been identified and stored in the built map. In this way, a sufficiently reliable and accurate map may be built, that can be used for efficiently and reliably guiding the agricultural vehicle. A sufficient number may relate to a minimum density of points (i.e. sets of coordinates) per area, such as 1 point per 100 m², or any other suitable density. It may also relate to a linear density along a boundary of the land area, such as 1 point/10 meter, and so on.

In embodiments, the object data of the landmark comprise shape data of the landmark, colour data of the landmark and/or predetermined coordinates of the landmark, such as gps-coordinates. These are useful examples of data that can help identify and locate landmarks, which data ma ybe reliably applied in object recognition techniques known per se, such as visual or radar (object) recognition. However, it is possible to use other ways of identifying landmarks, such as radio beacons and so on.

In embodiments, the position comprises 3 dimensions. In other words, not only ordinary map coordinates in x and y are used, but in addition a height (z coordinate). To determine height in addition to x and y, relative to a starting position, requires not only a reference height, in particular but not necessarily, of the starting position, but also a suitable number of landmarks. Mutual distance(s) may be determined based on at least one reference distance or position (2 or 3 coordinates) or on the basis of a plurality of measurements by the camera system, taken from different positions. Herein, relative positions and angles may be determined in the images, for a calculation of the position of the landmark(s), based on triangulation or the like.

In embodiments, the camera system comprises a 3D camera system. This is a suitable type of camera for more easily determining relative positions in 2 or preferably 3 dimensions, since a single position of this camera suffices to determine a distance between camera and landmark, or even mutual distance between landmarks, regardless of camera position. Especially this latter feature is helpful in building the map. However, other camera systems are possible as well, such as a stereo camera of two or more separate cameras, or even a single movable camera, or a single fixed camera in combination with moving the camera, or aircraft.

In embodiments, the starting position comprises a landmark with predetermined coordinates, such as a farm building or charging station. Such landmarks are useful, in that they will often serve as a kind of base station for the aircraft, to which it will return after a (first) mapping. Note that an important aspect of the present invention is that a new map may be built at any time, such as (right or shortly) before performing an agricultural task on the land area, such as mowing or otherwise harvesting, fertilising, and so on. Not only may weather conditions have caused pool that are not be worked, but it is also possible that new obstacles have arisen, that a neighbouring farmer used part of the land area by mistake and so on. By being able to make a new map at any given time, optimum flexibility may be ensured. Of course, other starting points may be used as well, as long as its coordinates with respect to any existing map are known, or, alternatively, if a new map is based on that new starting point, i.e. new relative coordinates will be used in the map to be built. Note that a previously made map may be taken as input, or basic map information, for building a new map, i.e. for updating an existing map. In such a case, taking the same starting point greatly simplifies matters.

In embodiments, the identifying the position of the further landmark comprises determining the position thereof with respect to the earlier identified position of at least one landmark. This means that a map is built up step-by-step, by first determining a first landmark's position with respect to a starting point, then moving on to a second landmark, determining its position with respect to any earlier landmark's position, and so on.

In an embodiment of the method of the invention, the imaging is performed using the camera system mounted on the aircraft flying, in particular hovering, above ground, in particular above or near the land area.

A camera mounted on an aircraft, where the objective of the camera is directed downwards, provides images of the land area as seen from the altitude on which the aircraft flies. The aircraft may be a wing-borne aircraft following a substantially horizontal flight path over the land area, or near to the land area. In some embodiments, the aircraft has a propulsion system producing vertical thrust to allow the aircraft to hover at an altitude position while also controlled horizontal movements are possible at speeds from zero to a maximum speed. The latter type of aircrafts may be unmanned aerial vehicles or drones, carrying at least one camera, e.g. carrying two cameras mounted at a predetermined distance from each other. Drones in particular are very advantageous for use in the present invention, since they are lightweight, in principle flying autonomously, and well-equipped for carrying out the present task, preferably even fully automatically, that is, without the order given by a human operator, but instead by some control unit. The images may be taken while the aircraft is above the land area, or near the land area, as long as the vehicle and at least one landmark with a known position and/or orientation can be imaged by the camera on the aircraft.

In an embodiment of the method of the invention, the vehicle data and the landmark data are obtained by image processing of the sequence of images. In the image processing, which is a data processing of image information, the vehicle and at least one landmark each are recognized in the image by their shape or contour. Next, in the image processing the position of the vehicle relative to the at least one landmark is determined, and mapped to an actual position of the vehicle on the land area based on an actual predetermined position of the at least one landmark. From the known vehicle position it can be determined if it matches with a position on a predetermined track to be followed. A vehicle path on the land area is determined (calculated) from a sequence of images showing a sequence of different vehicle positions. Thus, vehicle data are produced from the images taken to determine the vehicle position and vehicle displacement such that the path of the vehicle across the land area may be controlled. The vehicle data may comprise a vehicle position and at least one of a vehicle orientation, a vehicle direction, and a vehicle speed.

In an embodiment of the method, the agricultural vehicle comprises an optical marker, and the vehicle is identified by identifying the marker during image processing.

Although the agricultural vehicle may have a unique shape or contour allowing it to be well recognizable in an image through image processing, an optical marker provided on the vehicle may further improve the recognition of the vehicle in an image. For this purpose, the marker may have a particular shape and/or color to easily distinguish it from other structures. One or more markers may be provided on the agricultural vehicle to be able to facilitate the orientation of the vehicle and/or its direction of movement. Markers may e.g. be circular, rectangular, symmetrical or asymmetrical. Markers may also be character shaped, representing letters, numbers, or symbols. Also a surface area of the vehicle may be marked, e.g. by providing it with a distinguishable color, to act as an optical marker.

In embodiments, the landmark comprises a landscape element to be avoided or be followed by the agricultural vehicle, in particular a side of a ditch, side of a stream, a tree, a wall, a fence, an edge of a worked piece of the land area, such as a mowen or plowed piece of the land area, or the like. All such landmarks help in either guiding the agricultural vehicle past obstacles, or in helping the vehicle in performing its actual task efficiently, such as by ensuring an as small as desired overlap between land area parts that are succesively being mown, plowed and so on.

In an embodiment of the method of the invention, the landmark is or comprises an optical marker, and the landmark is identified by identifying the marker during image processing.

In a second aspect of the present invention, a system for real-time navigating an agricultural vehicle on an area of land is provided, the system comprising:
- a camera system configured for imaging at least part of the land area from above to provide a sequence of images showing the agricultural vehicle;
an image processor configured for:
- processing the sequence of images to identify positions of the agricultural vehicle on the land area from the sequence of images and, based on the identification of the positions of the agricultural vehicle, to provide vehicle data; and
- processing the sequence of images to identify a position of at least one landmark on the land area from the sequence of images and, based on the identification of the position of the at least one landmark, to provide landmark data; and
a control device configured for entering basic map information about the land area, the basic map information comprising object data of at least one landmark, and further being configured for controlling a path of the agricultural vehicle across the land area based on the map, the vehicle data and the landmark data. All features already mentioned above for the method and/or in the dependent method claims, may apply for the present system as well, together with the corresponding advantages.

The image processor may be one unit, or may comprise a plurality of units interacting with each other to perform a distributed image processing, wherein the respective units may be located at different parts of the system.

In embodiments, the camera system is mounted on an aircraft configured to fly, in particular to hover, above ground, in particular above or near the land area. Again, the camera system may comprise a single camera that is movable, two or more separate cameras, or in particular a 3D camera.

In embodiments, the aircraft is an unmanned aerial vehicle (a "drone").

These and other aspects of the invention will be more readily appreciated as the same becomes better understood by reference to the following detailed description and considered in connection with the accompanying drawings in which like reference symbols designate like parts.

### BRIEF DESCRIPTION OF THE DRAWINGS

Figure 1 schematically depicts a side view of a system for navigating an agricultural vehicle on an area of land in an embodiment of the invention.
Figure 2 illustrates an image of the land area taken by a camera onboard an aircraft.
Figure 3 diagrammatically shows a land area 20 with basic map information and a built map.

### DETAILED DESCRIPTION OF EMBODIMENTS

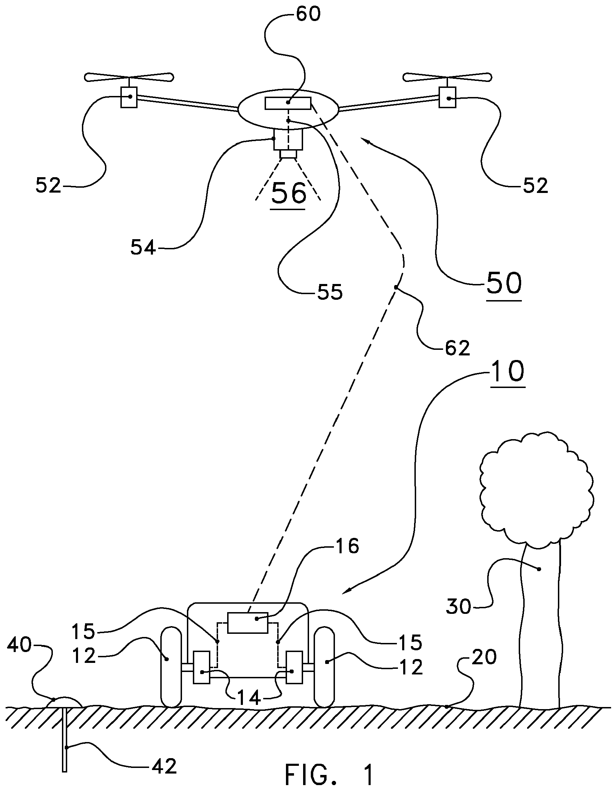

Figure 1 depicts a vehicle 10 on a land area 20. On the land area 20, or next to the land area 20, a tree 30 grows. The tree 30 may be considered a landmark. The land area 20, or an area next to the land area 20, further may comprise one or more other landmarks 40, which may have different shapes, features, and colors. In Figure 1, the landmark 40 is partly spherical, and fixed to the ground at a predetermined position, e.g. by a pole 42 driven in the ground and fixed to the landmark 40.

The vehicle 10 is e.g. a tractor, a combine harvester or other agricultural vehicle that is to be guided over the land area 20. The vehicle 10 has wheels 12 which are driven by a motor to move the vehicle across the land area 20. Furthermore, the wheels 12 can be steered to choose a particular direction of movement of the vehicle 10. The functions of propulsion and steering for each wheel are indicated by wheel control member 14, although in some embodiments a single wheel control member 14 may control more than one wheel 12.

The vehicle 10 comprises a vehicle path control device 16 coupled to the wheel control members 14 (as indicated by dashed lines 15) in order to control the movement of the vehicle 10, for controlling a path of the vehicle across the land area.

Above the vehicle 10, an aircraft 50 is flying. In the embodiment shown, the aircraft 50 is an unmanned aerial vehicle, commonly known as a drone, capable of horizontal and vertical flight, and hovering in the air. In other embodiments, the aircraft may be a wing-based aircraft configured for essentially horizontal flight.

The aircraft 50 comprises a plurality of propulsion units 52 generating forces on the aircraft 50 having vertical and horizontal components, where the horizontal force component may be zero in case the aircraft hovers and no disturbing wind forces act on the aircraft 50.

The aircraft 50 carries at least one camera 54. The camera 54 has a field of view 56 directed downwards, as indicated by dashed lines. The position and altitude of the aircraft 50 is selected such that the camera 54 can provide images of the land area 20 including representations of the vehicle 10 and the landmarks 30, 40.

The aircraft 50 comprises a processing unit 60 which is coupled to the camera 54 (as indicated by dashed line 55) to receive image data therefrom. The processing unit 60 may be wirelessly coupled to the vehicle path control device 16 of the vehicle 10 (as indicated by dashed line 62) for exchange of data, such as vehicle data and/or landmark data.

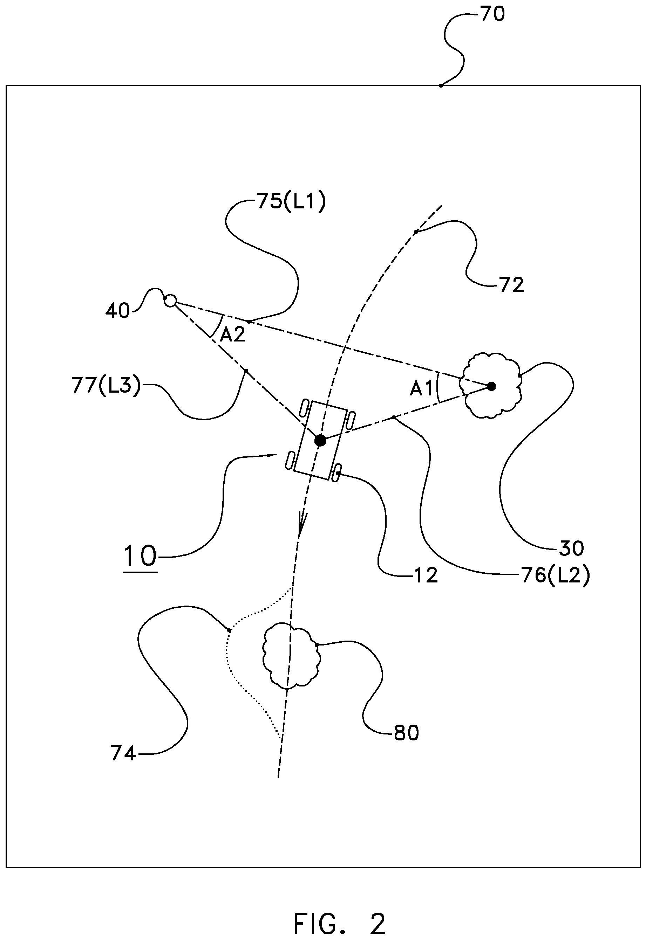

The camera 54 onboard the aircraft 50 provides an image 70 of the land area 20 as illustrated in Figure 2. The image shows top views of the vehicle 10, a tree 30, an optical marker 40, and an obstacle 80, such as a flooded part of the land area 20. The vehicle 10 is controlled to follow a predetermined track 72 as indicated in the image by a dashed line, in a direction indicated by an arrow.

In the image 70, a distance L1 expressed in a suitable unit of length, along line 75 (as indicated by a dash-dotted line) between (a center of) tree 30 and (a center of) marker 40 is established by image processing including identification of the tree 30 and the marker 40 in the image 70. Furthermore, a distance L2 expressed in the same unit of length as L1, along line 76 (as indicated by a dash-dotted line) between (a center of) tree 30 and (a center of) vehicle 10, as well as an angle A1 between lines 75 and 76 may be established by image processing. Alternatively or additionally, a distance L3 expressed in the same unit of length as L1, along line 77 (as indicated by a dash-dotted line) between (a center of) marker 40 and (a center of) vehicle 10, as well as an angle A2 between lines 75 and 77 may be established by image processing.

From the actual positions of the tree 30 and the marker 40 on the land area 20, such as expressed in coordinates, and being at a distance which can be calculated from the coordinates, now the actual position of the vehicle 10 on the land area 20 can be calculated, taking into account the image distances L1 and L2, and angle A1, and/or taking into account the image distances L1 and L3, and angle A2, and/ or taking into account the image distances L1, L2 and L3, through known triangulation calculations.

The position of the vehicle 10 on the land area 20, as calculated from the data of the image 70, may be compared to the track 72, and when it is found that the vehicle position is not on the track 72, then the vehicle path control device 16 may control the path of the vehicle 10 to bring the vehicle 10 back onto the track 72. Here, a sequence of images 70 provides information about the movement of the vehicle 10, derived from a change of vehicle positions in the different images 70.

Furthermore, the image 70 reveals that an obstacle 80 is located on the track 72. In order to avoid the obstacle 80, it is circumvented by generating a deviation path 74 (as indicated by a dotted line) having a starting position and an end position on the track 72, wherein the vehicle 10 is made to follow the deviation path 74 instead of the track 72 between the starting position and end position of the deviation path 74.

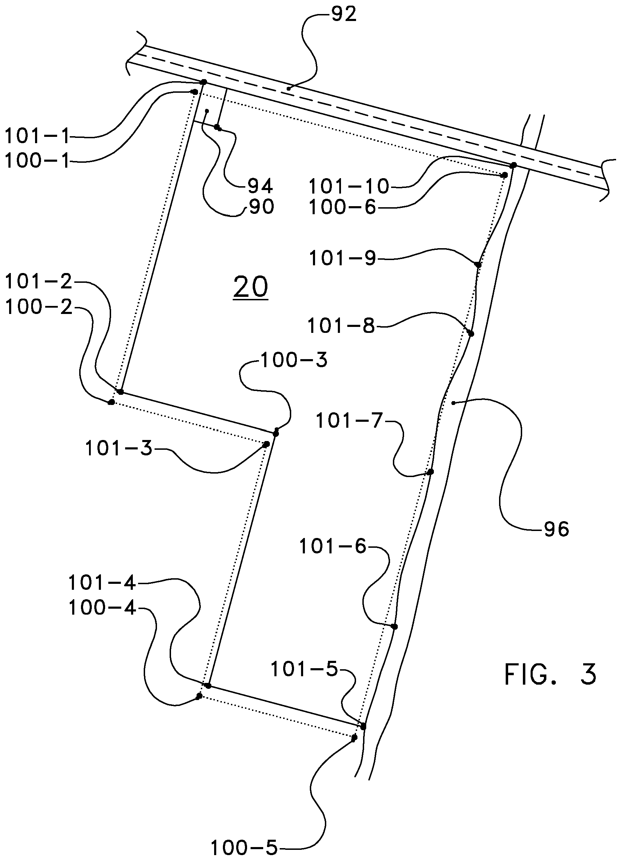

Figure 3 diagrammatically shows a land area 20 with basic map information and a built map.

Herein, there is a house 90 on the land area 20, next to a road 92. The house 90 has a charging station 94 for the UAV (not shown here), while 96 indicates a stream bordering the land area 20.

The basic map information comprises coordinate points 100-1 through 100-6, inclusive, while true map points include points 101-1 through 101-10.

In this example, the known map of the land area comprises just the six corner points 100-1 through 100-6, defining an irregular polygon. The coordinates are for example known from a cadaster map and transferred into gps coordinates. Also note that it can be seen that there is a difference between the points 100-1 through 100-6 and the true border of the land area 20, as indicated by the solid line.This difference may be due to inaccuracy from the gps system, the transfer of the cadaster map into gps coordinates, and so on. Furthermore, the stream 96 will have an irregular border or ditch with the land area. Thereby it is not possible based on the gps-coordinates alone to guide an agricultural vehicle optimally, i.e. right along the border of the stream 96.

Contrarily, the method and system of the present invention may determine the true coordinates of the limits of the land area 20, indicated by points 101-1 through 101-10. Thereto, a UAV or drone may start at e.g. a charging station 94 at the house or farm 90. It may then image its surroundings and determine a true border point 101-1, by triangulation or the like, as described above. Next, it can follow a true border of the land area 20, such as defined by a fence, a ditch, a roadside, a type of vegetation, and so on, in each case e.g. based on image processing and visual object detection. The UAV may follow the true border towards true corner 101-2, detectable by the sudden sharp turn of the border. Similarly, corners 101-3, 101-4 and 101-5 may be found. Then, the UAV arrives at the stream 96. Following its border in "northerly" direction (in the Figure, that is), it may detect points 101-6, 101-7, 101-8 and 101-9 as extreme points of the wavy edge of the stream 96. Note that these extreme points is just a single criterion for determining which points to determine for the map to be built. More or fewer points may be determined, according to other criteria. Finall, point 101-10 may be determined as the intersection of the stream 96 and the road 92, after which the UAV will return along the northern border, back to point 101-1, at which point the UAV will know it has returned to the first determined point, and the criterion for completing the map (in this case "determine all relevant border points, based on sharp angles and extreme points of curves" or the like) has been fulfilled.

Now, the true map of the land area 20 has been determined, without position error. This map may now be used when guiding e.g. a mower or other harvest, a sprayer, and so on.

Thus, a system of the invention for real-time navigating an agricultural vehicle 10 on a land area 20 has been described. The system comprises at least one camera 54 configured for imaging at least part of the land area 20 from above to provide a sequence of images 70 showing the agricultural vehicle 10. The system further comprises an image processor configured for: processing the sequence of images 70 to identify positions of the agricultural vehicle 10 on the land area 20 from the sequence of images 70 and, based on the identification of the positions of the agricultural vehicle 10, to provide vehicle data; and processing the sequence of images 70 to identify a position of at least one landmark 30, 40 on the land area 20 from the sequence of images 70 and, based on the identification of the position of the at least one landmark 30, 40, to provide landmark data. The system further comprises a control device 16 configured for controlling a path of the agricultural vehicle 10 across the land area 10 based on the vehicle data and the landmark data.

The image processor of the system of the invention may be part of the processing unit 60, or part of the vehicle path control device 16, or the functions of the image processor may be handled partly in the processing unit 60 and partly in the vehicle path control device 16. When the image processing is performed in the processing unit 60, the image data need not be transmitted wirelessly from the aircraft 50 to the vehicle 10. Instead, the image data may be processed onboard the aircraft 50, and only a limited amount of data needs to be transmitted from the aircraft 50 to the vehicle 10.

At least part of the functions of the image processor and the vehicle path control device 16 are implemented in software comprising software instructions which, when loaded in the image processor and vehicle path control device, respectively, cause them to perform said functions.

As explained above, in a system and method of navigating an agricultural vehicle on a land area, at least part of the land area is imaged in real-time from above to provide a sequence of images showing the vehicle and at least one landmark. Positions of the vehicle on the land area are identified from the sequence of images by image processing, to provide vehicle data based on the identification of the positions of the vehicle. Furthermore, a position of the at least one landmark on the land area is identified from the sequence of images by image processing, to provide landmark data based on the identification of the position of the at least one landmark. A path of the vehicle across the land area is controlled based on the vehicle data and the landmark data.

As required, detailed embodiments of the present invention are disclosed herein; however, it is to be understood that the disclosed embodiments are merely exemplary of the invention, which can be embodied in various forms. Therefore, specific structural and functional details disclosed herein are not to be interpreted as limiting, but merely as a basis for the claims and as a representative basis for teaching one skilled in the art to variously employ the present invention in virtually any appropriately detailed structure. Further, the terms and phrases used herein are not intended to be limiting, but rather, to provide an understandable description of the invention.

The terms "a"/"an", as used herein, are defined as one or more than one. The term plurality, as used herein, is defined as two or more than two. The term another, as used herein, is defined as at least a second or more. The terms including and/or having, as used herein, are defined as comprising (i.e., open language, not excluding other elements or steps). Any reference signs in the claims should not be construed as limiting the scope of the claims or the invention.

The mere fact that certain measures are recited in mutually different dependent claims does not indicate that a combination of these measures cannot be used to advantage.

The term coupled, as used herein, is defined as connected, in particular electrically or optically connected, although not necessarily directly, and not necessarily mechanically.

A single processor or other unit may fulfil the functions of several items recited in the claims.

## Claims

1. Method of navigating an agricultural vehicle (10) on a land area (20), the method comprising:
- building a map of the land area, with the help of an aircraft (50) with a camera system (54) and based on a plurality of landmarks (30, 40, 90, 92, 94, 96) in the land area;
- imaging, in real-time, at least part of the land area from above to provide a sequence of images (70) showing the vehicle and at least one landmark;
- identifying positions of the vehicle on the land area from the sequence of images by image processing, to provide vehicle data based on the identification of the positions of the vehicle;
- identifying a position of at least one landmark on the land area from the sequence of images by image processing, to provide landmark data based on the identification of the position of the at least one landmark;
- controlling a path of the vehicle across the land area based on the built map, the vehicle data and the landmark data.

2. Method according to claim 1, wherein the step of building the map comprises
- entering basic map information about the land area, the basic map information comprising object data of at least one landmark (30, 40, 90, 92, 94, 96);
- selecting a starting position for the aircraft (50);
- carrying out at least once
- imaging, in particular in real-time, the land area from above with the aircraft to provide an image of at least a part of the land area;
- detecting a landmark in said image by image processing, and based on the basic map information;
- identifying a position of said landmark by image processing and storing said position in the map
at least one of
i) detecting a further landmark in said image, and identifying the position of the further landmark,
ii) moving the aircraft to a new position
until a predetermined criterion with respect to the basic map information has been fulfilled.

3. Method according to any preceding claim, wherein the object data of the landmark comprise shape data of the landmark, colour data of the landmark and/or predetermined coordinates of the landmark, such as gps-coordinates.

4. Method according to any preceding claim, wherein the position comprises 3 dimensions.

5. Method according to any preceding claim, wherein the camera system comprises a 3D camera system.

6. Method according to any preceding claim, wherein the starting position comprises a landmark with predetermined coordinates, such as a farm building (90) or charging station (94).

7. Method according to any preceding claim, wherein the identifying the position of the further landmark comprises determining the position thereof with respect to the earlier identified position at least one landmark.

8. The method of any preceding claim, wherein the imaging is performed using the camera system mounted on the aircraft flying, in particular hovering, above ground, in particular above or near the land area.

9. The method of any preceding claim, wherein the vehicle data and the landmark data are obtained by image processing of the sequence of images.

10. The method of any preceding claim, wherein the vehicle and the at least one landmark each have a shape or contour, and wherein the vehicle and the at least one landmark are identified by recognizing its shape or contour, respectively, during image processing.

11. The method of any preceding claim, wherein the vehicle data comprise a vehicle position, and at least one of a vehicle orientation, a vehicle direction, and a vehicle speed.

12. The method of any preceding claim, wherein the agricultural vehicle comprises an optical marker (40), and wherein the vehicle is identified by identifying the marker during image processing.

13. The method of any preceding claim, wherein the landmark comprises a landscape element to be avoided or be followed by the agricultural vehicle, in particular a side of a ditch, side of a stream (96), a tree (30), a wall, a fence, an edge of a worked piece of the land area, such as a mowen or plowed piece of the land area, or the like.

14. The method of any preceding claim, wherein the landmark is or comprises an optical marker (40), and wherein the landmark is identified by identifying the marker during image processing.

15. The method of any preceding claim, further comprising:
determining, by the image processing, the position of the vehicle relative to the at least one landmark, and mapping it to an actual position of the vehicle on the land area based on an actual predetermined position of the at least one landmark.

16. The method of any preceding claim, further comprising:
calculating the vehicle path on the land area from a sequence of positions identified in a sequence of images.

17. The method of claim 16 further comprising:
- comparing the calculated vehicle path with a predetermined track (72); and
- if the calculated path deviates from the predetermined track, controlling the vehicle path towards the track.

18. The method of any preceding claim, further comprising:
- identifying an obstacle (80) on the vehicle path; and
- controlling the vehicle path to deviate from a predetermined track to avoid the obstacle.

19. A system for real-time navigating an agricultural vehicle (10) on an area of land (20), the system comprising:
- a camera system (54) mounted on an aircraft (50) and configured for imaging at least part of the land area from above to provide a sequence of images (70) showing the agricultural vehicle;
an image processor (60) configured for:
- processing the sequence of images to identify positions of the agricultural vehicle on the land area from the sequence of images and, based on the identification of the positions of the agricultural vehicle, to provide vehicle data; and
- processing the sequence of images to identify a position of at least one landmark (30, 40) on the land area from the sequence of images and, based on the identification of the position of the at least one landmark, to provide landmark data;
- a control device (16) configured for entering basic map information about the land area, the basic map information comprising object data of at least one landmark (30, 40, 90, 92, 94, 96), and further being configured for controlling a path of the agricultural vehicle across the land area based on the map, the vehicle data and the landmark data.

20. The system of claim 19, wherein the camera system is mounted on an aircraft (50) configured to fly, in particular to hover, above ground, in particular above or near the land area, and in particular comprises a 3D camera.

21. The system of claim 19 or 20, wherein the aircraft (50) is an unmanned aerial vehicle.

## Patentansprüche

1. Verfahren zur Navigation eines landwirtschaftlichen Fahrzeugs (10) auf einer Landfläche (20), das Verfahren umfassend:
- Erstellen einer Karte der Landfläche mithilfe eines Flugzeugs (50) mit einem Kamerasystem (54) und basierend auf einer Vielzahl von Landmarken (30, 40, 90, 92, 94, 96) auf der Landfläche;
- Abbilden, in Echtzeit, von mindestens einem Teil der Landfläche von oben, um eine Folge von Bildern (70) bereitzustellen, die das Fahrzeug und mindestens eine Landmarke zeigen;
- Identifizieren von Positionen des Fahrzeugs auf der Landfläche aus der Folge von Bildern mittels Bildverarbeitung, um Fahrzeugdaten basierend auf der Identifikation der Positionen des Fahrzeugs bereitzustellen;
- Identifizieren einer Position von mindestens einer Landmarke auf der Landfläche aus der Folge von Bildern mittels Bildverarbeitung, um Landmarkendaten basierend auf der Identifikation der Position der mindestens einen Landmarke bereitzustellen;
- Steuern einer Bahn des Fahrzeugs über die Landfläche hinweg basierend auf der erstellten Karte, den Fahrzeugdaten und den Landmarkendaten.

2. Verfahren nach Anspruch 1, wobei der Schritt des Erstellens der Karte umfasst:
- Eingeben grundlegender Karteninformationen über die Landfläche, wobei die grundlegenden Karteninformationen Objektdaten von mindestens einer Landmarke (30, 40, 90, 92, 94, 96) umfassen;
- Auswählen einer Startposition für das Flugzeug (50);
- mindestens einmalige Durchführung von:
- Abbilden, insbesondere in Echtzeit, der Landfläche von oben mit dem Flugzeug, um ein Bild von mindestens einem Teil der Landfläche bereitzustellen;
- Erkennen einer Landmarke in dem Bild mittels Bildverarbeitung und basierend auf den grundlegenden Karteninformationen;
- Identifizieren einer Position der Landmarke mittels Bildverarbeitung und Speichern der Position in der Karte; mindestens eines der Folgenden:
i) Erkennen einer weiteren Landmarke in dem Bild und Identifizieren der Position der weiteren Landmarke,
ii) Bewegen des Flugzeugs an eine neue Position, bis ein vorbestimmtes Kriterium in Bezug auf die grundlegenden Karteninformationen erfüllt ist.

3. Verfahren nach einem der vorhergehenden Ansprüche, wobei die Objektdaten der Landmarke Formdaten der Landmarke, Farbdaten der Landmarke und/oder vorbestimmte Koordinaten der Landmarke, wie etwa GPS-Koordinaten, umfassen.

4. Verfahren nach einem der vorhergehenden Ansprüche, wobei die Position 3 Dimensionen umfasst.

5. Verfahren nach einem der vorhergehenden Ansprüche, wobei das Kamerasystem ein 3D-Kamerasystem umfasst.

6. Verfahren nach einem der vorhergehenden Ansprüche, wobei die Startposition eine Landmarke mit vorbestimmten Koordinaten aufweist, wie etwa ein Wirtschaftsgebäude (90) oder eine Ladestation (94).

7. Verfahren nach einem der vorhergehenden Ansprüche, wobei das Identifizieren der Position der weiteren Landmarke das Bestimmen deren Position in Bezug auf die zuvor identifizierte Position mindestens einer Landmarke umfasst.

8. Verfahren nach einem der vorhergehenden Ansprüche, wobei das Abbilden unter Verwendung des Kamerasystems durchgeführt wird, das an dem Flugzeug angebracht ist, das über dem Boden fliegt, insbesondere im Schwebeflug, insbesondere über oder in der Nähe der Landfläche.

9. Verfahren nach einem der vorhergehenden Ansprüche, wobei die Fahrzeugdaten und die Landmarkendaten mittels Bildverarbeitung der Folge von Bildern erhalten werden.

10. Verfahren nach einem der vorhergehenden Ansprüche, wobei das Fahrzeug und die mindestens eine Landmarke jeweils eine Form oder Kontur aufweisen und wobei das Fahrzeug und die mindestens eine Landmarke jeweils durch Erkennen ihrer Form oder Kontur während der Bildverarbeitung identifiziert werden.

11. Verfahren nach einem der vorhergehenden Ansprüche, wobei die Fahrzeugdaten eine Fahrzeugposition und mindestens eine von einer Fahrzeugausrichtung, einer Fahrzeugrichtung und einer Fahrzeuggeschwindigkeit umfassen.

12. Verfahren nach einem der vorhergehenden Ansprüche, wobei das landwirtschaftliche Fahrzeug eine optische Markierung (40) umfasst und wobei das Fahrzeug durch Identifizieren der Markierung während der Bildverarbeitung identifiziert wird.

13. Verfahren nach einem der vorhergehenden Ansprüche, wobei die Landmarke ein Landschaftselement umfasst, welches das landwirtschaftliche Fahrzeug umgehen oder welchem es folgen soll, insbesondere eine Seite eines Grabens, eine Seite eines Baches (96), einen Baum (30), eine Wand, ein Zaun, eine Kante eines bewirtschafteten Stücks der Landfläche, wie ein gemähtes oder gepflügtes Stück der Landfläche, oder dergleichen.

14. Verfahren nach einem der vorhergehenden Ansprüche, wobei die Landmarke eine optische Markierung (40) ist oder umfasst und wobei die Landmarke durch Identifizieren der Markierung während der Bildverarbeitung identifiziert wird.

15. Verfahren nach einem der vorhergehenden Ansprüche, ferner umfassend:
Bestimmen, mittels der Bildverarbeitung, der Position des Fahrzeugs in Bezug auf die mindestens eine Landmarke und deren Zuordnen zu einer tatsächlichen Position des Fahrzeugs auf der Landfläche basierend auf einer tatsächlichen vorbestimmten Position der mindestens einen Landmarke.

16. Verfahren nach einem der vorhergehenden Ansprüche, ferner umfassend: Berechnen der Fahrzeugbahn auf der Landfläche aus einer Folge von Positionen, die in einer Folge von Bildern identifiziert wurden.

17. Verfahren nach Anspruch 16, ferner umfassend:
- Vergleichen der berechneten Fahrzeugbahn mit einer vorbestimmten Strecke (72); und
- wenn die berechnete Bahn von der vorbestimmten Strecke abweicht, Steuern der Fahrzeugbahn in Richtung der Strecke.

18. Verfahren nach einem der vorhergehenden Ansprüche, ferner umfassend:
- Identifizieren eines Hindernisses (80) auf der Fahrzeugbahn; und
- Steuern der Fahrzeugbahn, um von einer vorbestimmten Strecke abzuweichen, um das Hindernis zu umgehen.

19. System zur Echtzeitnavigation eines landwirtschaftlichen Fahrzeugs (10) auf einer Landfläche (20), das System umfassend:
- ein Kamerasystem (54), das an einem Flugzeug (50) angebracht und konfiguriert ist, mindestens einen Teil der Landfläche von oben abzubilden, um eine Folge von Bildern (70) bereitzustellen, die das landwirtschaftliche Fahrzeug zeigen;
- einen Bildprozessor (60), der konfiguriert ist zum:
- Verarbeiten der Folge von Bildern, um Positionen des landwirtschaftlichen Fahrzeugs auf der Landfläche aus der Folge von Bildern zu identifizieren und basierend auf der Identifikation der Positionen des landwirtschaftlichen Fahrzeugs Fahrzeugdaten bereitzustellen; und
- Verarbeiten der Folge von Bildern, um eine Position von mindestens einer Landmarke (30, 40) auf der Landfläche aus der Folge von Bildern zu identifizieren und basierend auf der Identifikation der Position der mindestens einen Landmarke Landmarkendaten bereitzustellen;
- eine Steuervorrichtung (16), die konfiguriert ist, grundlegende Karteninformationen über die Landfläche einzugeben, wobei die grundlegenden Karteninformationen Objektdaten von mindestens einer Landmarke (30, 40, 90, 92, 94, 96) umfassen, und ferner konfiguriert ist, eine Bahn des landwirtschaftlichen Fahrzeugs über die Landfläche hinweg basierend auf der Karte, den Fahrzeugdaten und den Landmarkendaten zu steuern.

20. System nach Anspruch 19, wobei das Kamerasystem an einem Flugzeug (50) angebracht ist, das konfiguriert ist, über dem Boden zu fliegen, insbesondere im Schwebeflug, insbesondere über oder in der Nähe der Landfläche, und insbesondere eine 3D-Kamera umfasst.

21. System nach Anspruch 19 oder 20, wobei das Flugzeug (50) ein unbemanntes Luftfahrzeug ist.

## Revendications

1. Procédé de navigation d'un véhicule agricole (10) sur une zone de terrain (20), le procédé comprenant :
- l'élaboration d'une carte de la surface de terrain, à l'aide d'un aéronef (50) équipé d'un système de caméra (54) et sur la base d'une pluralité de points de repère (30, 40, 90, 92, 94, 96) dans la zone de terrain ;
- l'imagerie, en temps réel, d'au moins une partie de la zone de terrain du dessus dans le but de produire une séquence d'images (70) montrant le véhicule et au moins un point de repère ;
- l'identification de positions du véhicule sur la zone de terrain à partir de la séquence d'images par traitement d'images, dans le but de produire des données de véhicule sur la base de l'identification des positions du véhicule ;
- l'identification d'une position d'au moins un point de repère sur la zone de terrain à partir de la séquence d'images par traitement d'images, dans le but de produire des données de point de repère sur la base de l'identification de la position de l'au moins un point de repère ;
- la commande d'une trajectoire du véhicule sur l'étendue de la zone de terrain sur la base de la carte élaborée, des données de véhicule et des données de point de repère.

2. Procédé selon la revendication 1, dans lequel l'étape d'élaboration de la carte comprend
- l'introduction d'informations de carte élémentaires concernant la zone de terrain, les informations de carte élémentaires comprenant des données d'objet d'au moins un point de repère (30, 40, 90, 92, 94, 96) ;
- la sélection d'une position de départ pour l'aéronef (50) ;
- l'exécution au moins une fois des étapes suivantes
- l'imagerie, plus particulièrement en temps réel, de la zone de terrain du dessus au moyen de l'aéronef dans le but de produire une image d'au moins une partie de la zone de terrain ;
- la détection d'un point de repère dans ladite image par traitement d'images et sur la base des informations de carte élémentaires ;
- l'identification d'une position dudit point de repère par traitement d'images et l'enregistrement de ladite position dans la carte
au moins une des étapes suivantes
i) la détection d'un point de repère supplémentaire dans ladite image et l'identification de la position du point de repère supplémentaire,
ii) le déplacement de l'aéronef à une nouvelle position
jusqu'à ce qu'un critère prédéterminé au regard des informations de carte élémentaires ait été satisfait.

3. Procédé selon l'une quelconque des revendications précédentes, dans lequel les données d'objet du point de repère comprennent des données de forme du point de repère, des données de couleur du point de repère et/ou des coordonnées prédéterminées du point de repère, telles que des coordonnées GPS.

4. Procédé selon l'une quelconque des revendications précédentes, dans lequel la position comprend 3 dimensions.

5. Procédé selon l'une quelconque des revendications précédentes, dans lequel le système de caméra comprend un système de caméra 3D.

6. Procédé selon l'une quelconque des revendications précédentes, dans lequel la position de départ comprend un point de repère de coordonnées prédéterminées, tel qu'un bâtiment d'exploitation agricole (90) ou une station de charge (94).

7. Procédé selon l'une quelconque des revendications précédentes, dans lequel l'identification de la position du point de repère supplémentaire comprend la détermination de sa position par rapport à la position précédemment identifiée d'au moins un point de repère.

8. Procédé selon l'une quelconque des revendications précédentes, dans lequel l'imagerie est exécutée au moyen du système de caméra monté sur l'aéronef volant, plus particulièrement effectuant un vol stationnaire, au-dessus du sol, plus particulièrement au-dessus ou à proximité de la zone de terrain.

9. Procédé selon l'une quelconque des revendications précédentes, dans lequel les données de véhicule et les données de point de repère sont obtenues par traitement d'images de la séquence d'images.

10. Procédé selon l'une quelconque des revendications précédentes, dans lequel le véhicule et l'au moins un point de repère présentent chacun une forme ou un contour, et dans lequel le véhicule et l'au moins un point de repère sont identifiés par reconnaissance de leur forme respective ou contour respectif au cours du traitement d'images.

11. Procédé selon l'une quelconque des revendications précédentes, dans lequel les données de véhicule comprennent une position de véhicule, et une orientation de véhicule et/ou une direction de véhicule et/ou une vitesse de véhicule.

12. Procédé selon l'une quelconque des revendications précédentes, dans lequel le véhicule agricole comprend un marqueur optique (40), et dans lequel le véhicule est identifié par identification du marqueur au cours du traitement d'images.

13. Procédé selon l'une quelconque des revendications précédentes, dans lequel le point de repère comprend un élément de paysage devant être évité ou suivi par le véhicule agricole, plus particulièrement un côté d'un fossé, un côté d'un ruisseau (96), un arbre (30), un mur, une clôture, un bord d'une parcelle travaillée de la zone de terrain, telle qu'une parcelle fauchée ou labourée de la zone de terrain, ou autres.

14. Procédé selon l'une quelconque des revendications précédentes, dans lequel le point de repère constitue ou comprend un marqueur optique (40), et dans lequel le point de repère est identifié par identification du marqueur au cours du traitement d'images.

15. Procédé selon l'une quelconque des revendications précédentes, comprenant en outre :
la détermination, par le traitement d'images, de la position du véhicule par rapport à l'au moins un point de repère, et sa mise en correspondance avec une position effective du véhicule sur la zone de terrain sur la base d'une position prédéterminée effective de l'au moins un point de repère.

16. Procédé selon l'une quelconque des revendications précédentes, comprenant en outre :
le calcul de la trajectoire du véhicule sur la zone de terrain à partir d'une séquence de positions identifiées dans une séquence d'images.

17. Procédé selon la revendication 16, comprenant en outre :
- la comparaison de la trajectoire calculée du véhicule à une route prédéterminée (72) ; et
- si la trajectoire calculée s'écarte de la route prédéterminée, la commande de la trajectoire du véhicule en direction de la route.

18. Procédé selon l'une quelconque des revendications précédentes, comprenant en outre :
- l'identification d'un obstacle (80) sur la trajectoire du véhicule ; et
- la commande de la trajectoire du véhicule dans le but de l'écarter d'une route prédéterminée afin d'éviter l'obstacle.

19. Système de navigation en temps réel d'un véhicule agricole (10) sur une zone de terrain (20), le système comprenant :
- un système de caméra (54) monté sur un aéronef (50) et configuré pour imager au moins une partie de la zone de terrain du dessus dans le but de produire une séquence d'images (70) montrant le véhicule agricole ;
- une unité de traitement d'images (60) configurée pour :
- traiter la séquence d'images dans le but d'identifier des positions du véhicule agricole sur la zone de terrain à partir de la séquence d'images et, sur la base de l'identification des positions du véhicule agricole, dans le but de produire des données de véhicule ; et
- traiter la séquence d'images dans le but d'identifier une position d'au moins un point de repère (30, 40) sur la zone de terrain à partir de la séquence d'images et, sur la base de l'identification de la position de l'au moins un point de repère, dans le but de produire des données de point de repère ;
- un dispositif de commande (16) configuré pour introduire des informations de carte élémentaires concernant la zone de terrain, les informations de carte élémentaires comprenant des données d'objet d'au moins un point de repère (30, 40, 90, 92, 94, 96), et configuré en outre pour commander une trajectoire du véhicule agricole sur l'étendue de la zone de terrain sur la base de la carte, des données de véhicule et des données de point de repère.

20. Système selon la revendication 19, dans lequel le système de caméra est monté sur un aéronef (50) configuré pour voler, plus particulièrement pour effectuer un vol stationnaire, au-dessus du sol, plus particulièrement au-dessus ou à proximité de la zone de terrain, et plus particulièrement comprend une caméra 3D.

21. Système selon la revendication 19 ou 20, dans lequel l'aéronef (50) est un véhicule aérien sans pilote.
